# EUROPÄISCHE PATENTSCHRIFT

(11) **EP 1 925 535 B1**
(45) Veröffentlichungstag und Bekanntmachung des Hinweises auf die Patenterteilung: **09.06.2010**
(21) Anmeldenummer: 07020181.9
(22) Anmeldetag: 16.10.2007
(51) Int. Cl.: B62D 25/14

(54) **Querträger**
Cross member
Traverse

(30) Priorität: 25.11.2006 DE 102006055736
(43) Veröffentlichungstag der Anmeldung: 28.05.2008
(73) Patentinhaber: Dr. Ing. h.c. F. Porsche AG, 70435 Stuttgart (DE)
(72) Erfinder: Meier, Steffen, 74392 Freudental (DE)

(56) Entgegenhaltungen:
- EP-A- 1 731 411
- WO-A-01/17842
- DE-A1- 4 336 105
- DE-A1- 19 728 557
- FR-A- 2 653 087
- US-B1- 6 851 742

## Beschreibung

Die vorliegende Erfindung betrifft einen Querträger, insbesondere einen Cockpitquerträger, in einem Kraftfahrzeug gemäß dem Oberbegriff des Anspruchs 1.

Aus der gattungsbildenden DE 197 28 557 B4 ist eine Befestigungsanordnung für einen Querträger in einem Kraftfahrzeug bekannt, bei der ein Querträger über Halteelemente mit der Karosserie, insbesondere mit den A-Säulen, verbunden ist. In einem mittleren Bereich stützt sich der Querträger über einen Tragrahmen an einem Längsmitteltunnel des Kraftfahrzeugs ab, wobei der Tragrahmen zwei abwärts gerichtete Stützelemente und einen, die beiden Stützelemente an ihrem unteren Ende verbindenden Verbindungsträger aufweist. Der Verbindungsträger ist dabei als Tunnelbock ausgebildet und mit dem Längsmitteltunnel des Kraftfahrzeugs verschweißt. Durch die Verschweißung des Tunnelbocks mit dem Längsmitteltunnel sind diese fest und unverrückbar miteinander verbunden. Bei der aus der DE 197 28 557 B4 bekannten Befestigungsanordnung ist zwar ein Ausgleich von Fertigungstoleranzen möglich, die Montage des Querträgers an der Karosserie gestaltet sich jedoch relativ aufwändig.

Aus der nachveröffentlichten EP-A-1 894 819 ist ein Querträger für ein Kraftfahrzeug bekannt, der an beiden freien Enden mit einer Karosserie des Fahrzeugs, insbesondere mit den A-Säulen verbunden ist. Der Querträger ist über einen Tragrahmen mit einem Längsmitteltunnel des Kraftfahrzeugs verbunden, wobei der Tragrahmen zwei abwärts ausgerichtete Stützelemente und einen, die beiden Stützelemente an ihrem unteren Ende verbindenden Verbindungsträger aufweist. Der Verbindungsträger ist über eine Fixiereinrichtung, welche durch ein Langloch gebildet wird, am Längsmitteltunnel über eine Schraube festlegbar, so dass ein Ausrichten des Verbindungsträgers in Fahrzeugquerrichtung am Längsmitteltunnel des Kraftfahrzeugs möglich wird.

Die vorliegende Erfindung beschäftigt sich mit dem Problem, für einen Querträger der gattungsgemäßen Art eine verbesserte Ausführungsform anzugeben, die sich insbesondere durch eine vereinfachte Montage des Querträgers an der Karosserie bei der gleichzeitigen Möglichkeit Fertigungstoleranzen auszugleichen auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, eine bislang feste, insbesondere geschweißte, Verbindung zwischen einem auf einem Längsmitteltunnel des Kraftfahrzeugs aufliegenden Verbindungsträger und dem Längsmitteltunnel selbst, nunmehr lös- bzw. justierbar auszubilden. Dies wird beispielsweise dadurch bewirkt, dass der Verbindungsträger mit dem Längsmitteltunnel verschraubt wird, wobei ein Schraubenschaft in einer am Querträger ausgebildeten Übermaßbohrung oder einem Langloch verstellbar ist und dadurch der Querträger in seiner Lage bezüglich des Längsmitteltunnels ausgerichtet werden kann. Bei dem Querträger handelt es sich insbesondere um einem Cockpitquerträger, der mit seinen Längsenden mit den beiden A-Säulen einer Fahrzeugkarosserie verbunden ist und sich in einem mittleren Bereich über einen Tragrahmen an bzw. auf einem Längsmitteltunnel des Kraftfahrzeugs abstützt. Der Tragrahmen weist dabei zwei vom Querträger abwärts gerichtete Stützelemente und den oben beschriebenen Verbindungsträger auf, welcher die beiden Stützelemente ihren, dem Längsmittel zugewandten Enden, verbindet. Durch die Verschraubung des Verbindungsträgers mit dem Längsmitteltunnel verbunden mit einer gewissen Verstellmöglichkeit des Verbindungsträgers bezüglich des Längsmitteltunnels solange die Schrauben nicht fest angezogen sind, können Fertigungstoleranzen deutlich besser ausgeglichen werden und zu dem kann die Montage des Querträgers an der Karosserie des Kraftfahrzeugs vereinfacht werden, in dem zunächst sämtliche Verbindungen zwischen dem Verbindungsträger und dem Längsmitteltunnel bzw. dem Verbindungsträger und den beiden Stützelementen zunächst nur lose montiert werden und erst nach dem vollständigen Einbau des beispielsweise als Cockpitquerträger ausgebildeten Querträgers im Kraftfahrzeug angezogen werden, wodurch insbesondere der Aufbau von Eigenspannungen vermieden werden kann und zugleich die Montage des Querträgers an der Karosserie des Kraftfahrzeugs vereinfacht wird, da der Querträger nicht wie bisher einenends mit der Karosserie und anderenends mit dem fest mit dem Längsmitteltunnel verbundenen Verbindungsträger verbunden werden muss.

Zweckmäßig liegt der Verbindungsträger in am Längsmitteltunnel fixiertem Zustand an zwei aneinander angrenzenden Außenflächen des Längsmitteltunnels an. Dies erlaubt eine optimale Abstützposition, da sich der Querträger über die Stützelemente und den Verbindungsträger im wesentlichen flächig am Längsmitteltunnel des Kraftfahrzeugs abstützen kann und dadurch Spannungsspitzen, wie sie bei einer punktuellen Abstützung auftreten würde, vermieden werden können. Gleichzeitig kann durch die zumindest teilweise flächige Anlage des Verbindungsträgers an die beiden aneinander grenzenden Außenflächen des Längsmitteltunnels eine exakt positionierte Lage des Verbindungsträgers bezüglich des Längsmitteltunnels vorgegeben werden, wodurch sich die Montage vereinfacht.

Bei einer vorteilhaften Weiterbildung des erfindungsgemäßen Querträgers weist der Verbindungsträger Verstärkungsstege auf. Derartige Verstärkungsstege bewirken eine Versteifung des Verbindungsträgers, wobei die Verstärkungsstege vorzugsweise gitterartig auf einer dem Längsmitteltunnel zugewandten Seite des Verbindungsträgers angeordnet sind und dadurch eine Versteifung des Verbindungsträgers in mehrere Richtungen bewirken. Die Verstärkungsstege bewirken darüber hinaus die Versteifung des Verbindungsträgers, ohne dessen Eigengewicht wesentlich zu erhöhen. Dies ist insbesondere für eine Energiebilanz des Kraftfahrzeugs von Vorteil, da durch leichtere Einzelteile das Gesamtgewicht des Kraftfahrzeugs reduziert werden kann und dadurch dessen Kraftstoffverbrauch sinkt.

Bei einer weiteren vorteilhaften Ausführungsform der erfindungsgemäßen Lösung ist die zumindest eine Fixiereinrichtung zum Fixieren des Verbindungsträgers am Längsmitteltunnel versenkt angeordnet. Hierdurch wird ein direkter Berührungskontakt mit den oftmals scharfkantigen Muttern bzw. Schraubenköpfen der Fixiereinrichtung vermieden, wodurch sich insbesondere die Gefahr von Verletzungen bei der Wartung des Kraftfahrzeugs verringert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Ansicht auf einen erfindungsgemäßen Querträger, der sich über Stützelemente und einen Verbindungsträger an einem Längsmitteltunnel eines Kraftfahrzeugs abstützt,
- Fig. 2: eine Detailansicht von oben auf den Verbindungsträger,
- Fig. 3: eine Schnittdarstellung durch den Längsmitteltunnel mit dem Verbindungsträger entlang der Schnittebene III-III,
- Fig. 4: eine Ansicht des Verbindungsträgers von schräg von unten,
- Fig. 5: eine Darstellung wie in Fig. 4, jedoch aus einer anderen Perspektive und mit dem Längsmitteltunnel.

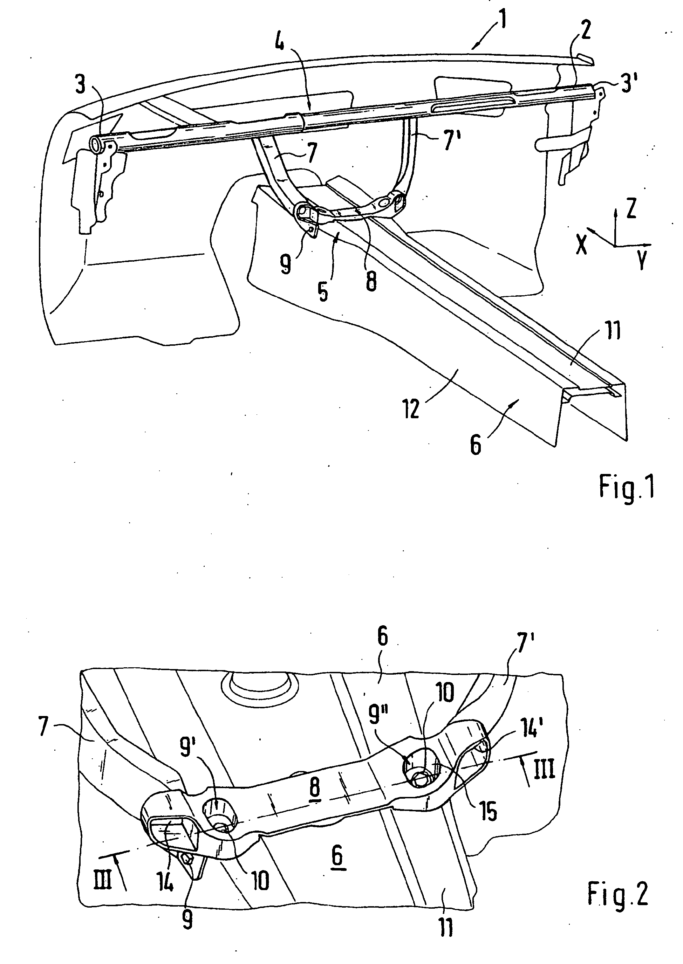

Gemäß Fig. 1 ist eine Vorderwagenstruktur 1 eines im übrigen nicht dargestellten Kraftfahrzeugs gezeigt, die einen vorderen Abschluss einer Fahrgastzelle bildet. An der Vorderwagenstruktur 1, welche Teil einer nicht dargestellten Fahrzeugkarosserie ist, ist auch ein Querträger 2, hier ein Cockpitquerträger 2, angeordnet, welcher üblicherweise als Träger für ein ebenfalls nicht gezeigtes Armaturenbrett dient. Mit seinen Längsenden 3, 3' wird der Querträger 2 mit nicht gezeigten A-Säulen des Kraftfahrzeugs fest verbunden, wodurch er das Kraftfahrzeug in Querrichtung aussteift. In einem mittleren Bereich 4 stützt sich der Cockpitquerträger 2 über einen Tragrahmen 5 an einem Längsmitteltunnel 6 des Kraftfahrzeugs ab, wodurch eine ungewollte Verformung des Querträgers 2, beispielsweise durch die Last des Armaturenbretts, vermieden werden kann. Der Längsmitteltunnel 6 dient dabei üblicherweise als Tunnel für eine nicht gezeigte Antriebswelle des Kraftfahrzeugs, welche beispielsweise von einem Getriebe zu einer Hinterachse des Kraftfahrzeugs verläuft.

Der Tragrahmen 5 weist zwei abwärts gerichtete Stützelemente 7, 7' sowie einen, die beiden Stützelemente 7, 7' an ihrem unteren Ende verbindenden Verbindungsträger 8 auf. Die Stützelemente 7, 7' können dabei ein- oder mehrteilig ausgebildet sein, wobei sie in den gezeigten Ausführungsbeispielen einteilig ausgebildet sind. Über den auf dem Längsmitteltunnel 6 aufliegenden Verbindungsträger 8 stützt sich somit der Querträger 2 vorzugsweise nach unten ab. Unten bedeutet in diesem Falle entgegen der Z-Richtung, welche üblicherweise die vertikale Komponente eines Koordinatensystems darstellt. Als X-Richtung wird dabei die Fahrzeugslängsrichtung bezeichnet, während als Y-Richtung die Fahrzeugquerrichtung bezeichnet wird.

Um einerseits die Montage des Querträgers 2 an der Vorderwagenstruktur 1 bzw. am Längsmitteltunnel 6 zu erleichtern und andererseits Material belastende Eigenspannungszustände weitestgehend vermeiden zu können, ist der Verbindungsträger 8 über zumindest eine Fixiereinrichtung 9 am Längsmitteltunnel 6 festlegbar, die insbesondere während der Montage des Querträgers 2 am Längsmitteltunnel 6 ein Ausrichten des Verbindungsträger 8 am Längsmitteltunnel 6 erlaubt. Als Fixiereinrichtung 9 kommt beispielsweise eine Schraubverbindung mit einem Schraubelement 10 (vgl. Fig. 2) in Betracht.

Wie Fig. 1 zeigt, liegt der Verbindungsträger 8 auf einer oberen Tunnelfläche 11 des Längsmitteltunnels 6 auf und liegt gleichzeitig an einer Seitenfläche 12 des Längsmitteltunnels 6 an. Der Verbindungsträger 8 liegt somit in am Längsmitteltunnel 6 fixiertem Zustand an zwei aneinander angrenzenden Flächen 11, 12 des Längsmitteltunnels 6 an, wodurch eine im wesentlichen formschlüssige Verbindung erzielt wird.

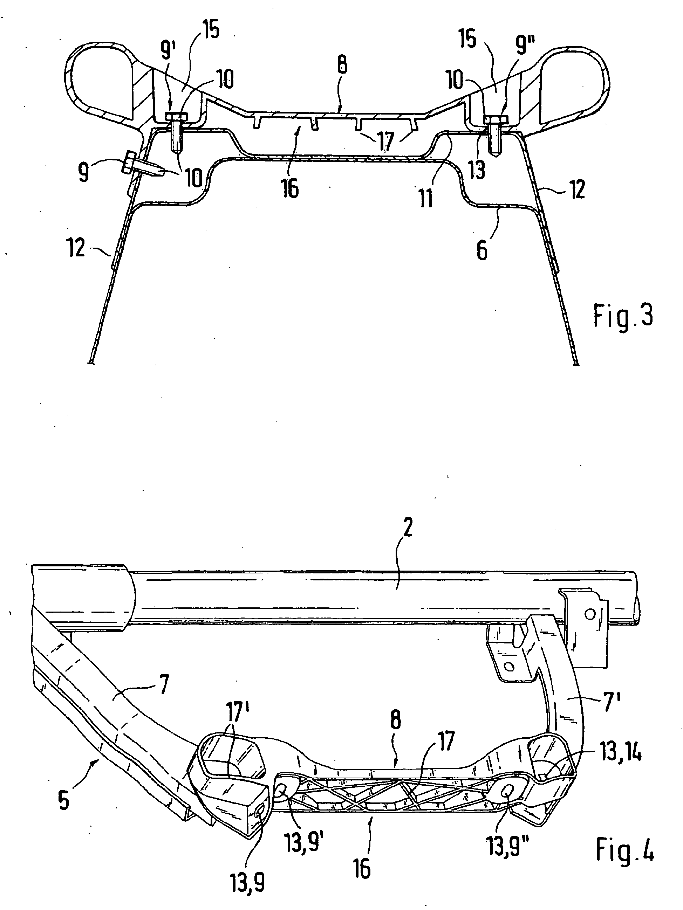

Zur Fixierung des Verbindungsträgers 8 am Längsmitteltunnel 6 sind gemäß den Fig. 1 bis 3 insgesamt drei Fixiereinrichtungen 9, 9', 9" vorgesehen, wovon eine den Verbindungsträger 8 an der Seitenwand bzw. Seitenfläche 12 des Längsmitteltunnels 6 fixiert, während die beiden anderen Fixiereinrichtungen 9', 9" den Verbindungsträger 8 an der oberen Tunnelfläche 11 des Längsmitteltunnels 6 fixieren. Dabei weist jede Fixiereinrichtung 9, 9', 9", wie oben erwähnt, zumindest ein Schraubelement 10 auf, welches den Verbindungsträger 8 vorzugsweise in einer zugehörigen Durchgangsöffnung 13 durchdringt (vgl. Fig. 4) und in den Längsmitteltunnel 6 des Kraftfahrzeugs einschraubbar ist. Um nun die Justierbarkeit des Verbindungsträgers 8 am Längsmitteltunnel 6 gewährleisten zu können, weisen die Durchgangsöffnungen 13 entweder einen größeren Durchmesser als das Schraubelement 10 auf oder aber sind als Langloch, wie in Fig. 4 dargestellt, ausgebildet. Dabei bietet eine als Langloch ausgebildete Durchgangsöffnung 13 eine Verstellmöglichkeit entlang einer Richtung, während eine Durchgangsöffnung 13 mit einem im Vergleich zum Schraubenelement 10 größeren Durchmesser eine Justiermöglichkeit in mehrere Richtungen ermöglicht. Gemäß der Fig. 4 sind die Durchgangsöffnungen 13 dabei als Langlöcher ausgebildet, deren Längserstreckung in X-Richtung, also in Fahrzeuglängsrichtung verläuft und dadurch eine Justier- bzw. Positioniermöglichkeit des Verbindungsträgers 8 am Längsmitteltunnel 6 in Fahrzeuglängsrichtung eröffnet. Dabei soll offen bleiben, ob die Durchgangsöffnung 13 wie beispielsweise in Fig. 4 gezeigt, am Verbindungsträger 8 oder am Längsmitteltunnel 6 angeordnet sind, wobei im letzteren Fall das Schraubelement 10 nicht in den Längsmitteltunnel 6 einschraubbar ist, sondern als Schrauben-Mutter-Verbindung ausgebildet ist. Je nach Größe der Längserstreckung des Langlochs kann dabei eine Justierbewegung in Richtung der Längserstreckung des Langlochs definiert werden.

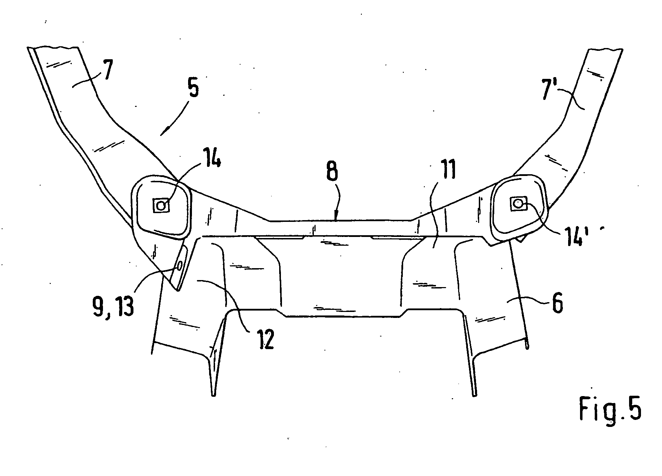

In ähnlicher Weise ist der Verbindungsträger 8 mit den beiden Stützelementen 7, 7' verbunden wobei hierbei das Stützelement 7, 7' über eine zugehörige Halteeinrichtung 14, 14' am Verbindungsträger 8 gehalten ist. Die Halteeinrichtungen 14, 14' können dabei ebenfalls wiederum jeweils ein Schraubelement 10 aufweisen, welches beispielsweise in das jeweils zugehörige Stützelement 7, 7' oder in den Verbindungsträger 8 einschraubbar ist. Denkbar ist auch, dass im Verbindungsbereich zwischen Stützelement 7, 7' und dem Verbindungsträger 8 in beiden Komponenten Durchgangsöffnungen 13 vorgesehen sind, welche vom Schraubelement 10 durchgriffen werden und wobei das Schraubelement 10 mit einer nicht gezeigten Mutter angezogen werden kann. Erfindungsgemäß sind dabei die Halteeinrichtungen 14, 14' so ausgerichtet, dass die Stützelement 7, 7' in Fahrzeugquerrichtung, also Y-Richtung, und in vertikaler Richtung, also in Z-Richtung, ausgerichtet werden können. Dies kann beispielsweise dadurch erfolgen, dass der Verbindungsträger 8 und das Stützelement 7, 7' im Bereich der Halteeinrichtungen 14, 14' eine Durchgangsöffnung 13 mit Übermaß aufweisen, d.h. die Durchgangsöffnung 13 besitzt einen größeren Durchmesser als das Schraubelement 10. Eine derartige Durchgangsbohrung 13 mit Übermaß ist beispielsweise in Fig. 5 dargestellt, wobei hier die Durchgangsöffnung 13 mit Übermaß im Verbindungsträger 8 angeordnet ist.

Wie aus den Fig. 2 und 4 zu erkennen ist, sind die Fixiereinrichtungen 9, 9', 9" bzw. die Schraubelemente 10 der Halteeinrichtungen 14, 14' vorzugsweise versenkt am Verbindungsträger 8 angeordnet, wodurch insbesondere ein direkter und möglicherweise verletzender Kontakt mit einem scharfkantigen Schraubenkopf des Schraubelements 10 vermieden werden kann. Insbesondere in Fig. 3 ist die versenkte Anordnung des Schraubeelements 10 in einer Ausnehmung 15 deutlich zu erkennen.

Betrachtet man Fig. 4, so fällt auf, dass der Verbindungsträger 8 an seiner dem Längsmitteltunnel 6 zugewandten Unterseite 16 Verstärkungsstege 17 aufweist, welche zur Aussteifung des Verbindungsträgers 8 dienen. Diese Verstärkungsstege 17 sind dabei vorzugsweise gitterartig angeordnet, wodurch eine Aussteifung des Verbindungsträgers 8 in mehrere Richtungen bewirkt werden kann. Gleichzeitig bieten die Verstärkungsstege 17 im Vergleich zu einem Vollprofil den großen Vorteil, dass der Verbindungsträger 8 deutlich leichter ausgebildet werden kann, was insbesondere im Sportwagenbau von großem Vorteil ist. Dabei sind nicht nur an der Unterseite 16 Verstärkungsstege 17 angeordnet, sondern auch längsendseitig des Verbindungsträger 8, wobei hier die Verstärkungsstege 17' die Halteeinrichtungen 14, 14' umranden.

Beim Montagevorgang des Querträgers 2 an der Vorderwagenstruktur 1 des Kraftfahrzeugs werden zunächst die Fixiereinrichtungen 9, 9', 9" sowie die beiden Halteeinrichtungen 14, 14' in losem Zustand eingesetzt und hiernach der Querträger 2 bezüglich der Vorderwagenstruktur 1 bzw. bezüglich des Längsmitteltunnels 6 ausgerichtet. Anschließend wird zunächst die Fixiereinrichtung 9 und dann die Fixiereinrichtungen 9', 9" nacheinander festgezogen. Durch das Festziehen der Fixiereinrichtungen 9 bis 9" wird der Verbindungsträger 8 fest am Längsmitteltunnel 6 fixiert. Nach dem Festlegen des Verbindungsträgers 8 am Längsmitteltunnel 6 werden die Schraubelemente 10 der Halteeinrichtungen 14, 14' nacheinander angezogen, wodurch eine steife Verbindung zwischen dem Längsmitteltunnel 6 und dem Querträger 2 hergestellt wird. Durch die Möglichkeit des Ausrichtens des Querträgers 2 in X, Y und Z-Richtung bezüglich des Längsmitteltunnels 6 kann eine spannungsfreie Montage des Tragrahmens 5 am Längsmitteltunnel 6 erreicht werden und zudem kann die Montage vereinfacht werden, da im Vergleich zu einem herkömmlichen, am Längsmitteltunnel 6 festgeschweißten Verbindungsträger 8 Fertigungstoleranzen im Rohbau des Kraftfahrzeugs besser ausgeglichen werden können.

## Patentansprüche

1. Querträger (2) in einem Kraftfahrzeug, der beidseitig mit A-Säulen an der Karosserie (1) des Kraftfahrzeugs verbunden ist und sich in einem mittleren Bereich (4) über einen Tragrahmen (5) an einem Längsmitteltunnel (6) des Kraftfahrzeugs abstützt, wobei der Tragrahmen (5) zwei abwärts gerichtete Stützelemente (7, 7') und einen, die beiden Stützelemente (7, 7') an ihrem unteren Ende verbindenden Verbindungsträger (8) aufweist, **dadurch gekennzeichnet, dass** der Verbindungsträger (8) über drei Fixiereinrichtungen (9, 9', 9") am Längsmitteltunnel (6) festlegbar ist, die ein Ausrichten des Verbindungsträgers (8) am Längsmitteltunnel (6) des Kraftfahrzeugs erlaubt und der Verbindungsträger (8) in am Längsmitteltunnel (6) fixierten Zustand an zwei aneinandergrenzenden Tunnelflächen (11, 12) des Längsmitteltunnels (6) anliegt, wobei die eine Fixiereinrichtung (9) den Verbindungsträger (8) an einer Seitenfläche (12) des Längsmitteltunnels (6) fixiert, während die beiden anderen Fixiereinrichtungen (9', 9") den Verbindungsträger (8) an einer oberen Tunnelfläche (11) des Längsmitteltunnels (6) fixieren.

2. Querträger nach Anspruch 1, **dadurch gekennzeichnet, dass** zumindest eine Fixiereinrichtung (9, 9', 9") ein Schraubelement (10) aufweist, weiches den Verbindungsträger (8) in einer zugehörigen Durchgangsöffnung (13) durchdringt und in den Längsmitteltunnel (6) des Kraftfahrzeugs einschraubbar ist.

3. Querträger nach Anspruch 2, **dadurch gekennzeichnet, dass** die Durchgangsöffnung (13) als Langloch ausgebildet ist und ein Ausrichten des Verbindungsträgers (8) in Fahrzeuglängsrichtung erlauben.

4. Querträger nach einem der Ansprüche 1 bis 3, **dadurch gekennzeichnet, dass** jedes Stützelement (7, 7') über eine zugehörige Halteeinrichtung (14, 14') am Verbindungsträger (8) gehalten ist, die ein Ausrichten der Stützelemente (7, 7') in Fahrzeugquerrichtung und in der Höhe erlauben.

5. Querträger nach Anspruch 4, **dadurch gekennzeichnet, dass** der Verbindungsträger (8) und das Stützelement (7, 7') im Bereich der Halteeinrichtung (14, 14') eine Durchgangsöffnung (13) mit Übermaß aufweist, durch die das Schraubelement (10) hindurchgreift und die ein Ausrichten der Stützelemente (7, 7') in Fahrzeugquerrichtung und in der Höhe erlauben.

6. Querträger nach einem der Ansprüche 1 bis 5, **dadurch gekennzeichnet, dass** der Verbindungsträger (8) zumindest einen verstärkenden Steg (17) aufweist.

7. Querträger nach einem der Ansprüche 1 bis 6, **dadurch gekennzeichnet, dass** zumindest eine Fixiereinrichtung (9, 9', 9") und/oder ein Schraubelement (10) zum Halten der Stützelements (7, 7') am Verbindungsträger (8) versenkt angeordnet sind/ist.

## Claims

1. Crossmember (2) in a motor vehicle, the crossmember being connected on both sides to the motor vehicle body (1) by A pillars and being supported in a central region (4) on a longitudinal centre tunnel (6) of the motor vehicle via a supporting frame (5), wherein the supporting frame (5) has two downwardly directed supporting elements (7, 7') and a connecting member (8) which connects the two supporting elements (7, 7') at the lower end thereof, **characterized in that** the connecting member (8) is fixable to the longitudinal centre tunnel (6) via three fixing devices (9, 9', 9") permitting alignment of the connecting member (8) on the longitudinal centre tunnel (6) of the motor vehicle, and the connecting member (8), when fixed to the longitudinal centre tunnel (6), bears against two mutually adjacent tunnel surfaces (11, 12) of the longitudinal centre tunnel (6), the one fixing device (9) fixing the connecting member (8) to a side surface (12) of the longitudinal centre tunnel (6) while the two other fixing devices (9', 9'') fix the connecting member (8) to an upper tunnel surface (11) of the longitudinal centre tunnel (6).

2. Crossmember according to Claim 1, **characterized in that** at least one fixing device (9, 9', 9") has a screw element (10) which passes through the connecting member (8) in an associated passage opening (13) and is screwable into the longitudinal centre tunnel (6) of the motor vehicle.

3. Crossmember according to Claim 2, **characterized in that** the passage opening (13) is designed as an elongated hole and permits alignment of the connecting member (8) in the longitudinal direction of the vehicle.

4. Crossmember according to one of Claims 1 to 3, **characterized in that** each supporting element (7, 7') is held on the connecting member (8) via an associated holding device (14, 14'), said holding devices permitting alignment of the supporting elements (7, 7') in the transverse direction of the vehicle and vertically.

5. Crossmember according to Claim 4, **characterized in that,** in the region of the holding device (14, 14'), the connecting member (8) and the supporting element (7, 7') have a passage opening (13) of excess size through which the screw element (10) reaches and which permits alignment of the supporting elements (7, 7') in the transverse direction of the vehicle and vertically.

6. Crossmember according to one of Claims 1 to 5, **characterized in that** the connecting member (8) has at least one reinforcing web (17).

7. Crossmember according to one of Claims 1 to 6, **characterized in that** at least one fixing device (9, 9', 9") and/or a screw element (10) for holding the supporting element (7, 7') on the connecting member (8) are/is arranged in a recessed manner.

## Revendications

1. Traverse (2) dans un véhicule automobile, qui est connectée de part et d'autre par des colonnes A à la carrosserie (1) du véhicule automobile, et qui s'appuie dans une région centrale (4) par le biais d'un châssis porteur (5) sur un tunnel central longitudinal (6) du véhicule automobile, le châssis porteur (5) présentant deux éléments de support orientés vers le bas (7, 7') et un support de connexion (8) reliant les deux éléments de support (7, 7') à leur extrémité inférieure, **caractérisée en ce que** le support de connexion (8) peut être fixé au tunnel central longitudinal (6) par le biais de trois dispositifs de fixation (9, 9', 9"), qui permettent une orientation du support de connexion (8) sur le tunnel central longitudinal (6) du véhicule automobile, et le support de connexion (8) s'applique dans l'état fixé sur le tunnel central longitudinal (6) contre deux surfaces de tunnel adjacentes (11, 12) du tunnel central longitudinal (6), l'un des dispositifs de fixation (9) fixant le support de connexion (8) à une surface latérale (12) du tunnel central longitudinal (6), tandis que les deux autres dispositifs de fixation (9', 9") fixent le support de connexion (8) à une surface de tunnel supérieure (11) du tunnel central longitudinal (6).

2. Traverse selon la revendication 1, **caractérisée en ce qu'**au moins un dispositif de fixation (9, 9', 9") présente un élément de vis (10) qui traverse le support de connexion (8) dans une ouverture de passage associée (13) et qui peut être vissé dans le tunnel central longitudinal (6) du véhicule automobile.

3. Traverse selon la revendication 2, **caractérisée en ce que** l'ouverture de passage (13) est réalisée sous forme de trou oblong et permet une orientation du support de connexion (8) dans la direction longitudinale du véhicule.

4. Traverse selon l'une quelconque des revendications 1 à 3, **caractérisée en ce que** chaque élément de support (7, 7') est maintenu sur le support de connexion (8) par le biais d'un dispositif de retenue associé (14, 14'), qui permet une orientation des éléments de support (7, 7') dans la direction transversale du véhicule et en hauteur.

5. Traverse selon la revendication 4, **caractérisée en ce que** le support de connexion (8) et l'élément de support (7, 7') présentent dans la région du dispositif de retenue (14, 14') une ouverture de passage (13) avec un surdimensionnement, à travers laquelle l'élément de vis (10) vient en prise et qui permet une orientation des éléments de support (7, 7') dans la direction transversale du véhicule et en hauteur.

6. Traverse selon l'une quelconque des revendications 1 à 5, **caractérisée en ce que** le support de connexion (8) présente au moins une nervure de renforcement (17).

7. Traverse selon l'une quelconque des revendications 1 à 6, **caractérisée en ce qu'**au moins un dispositif de fixation (9, 9', 9") et/ou un élément de vis (10) sont disposés de manière renfoncée sur le support de connexion (8) pour retenir les éléments de support (7, 7').
